(19) Europäisches Patentamt / European Patent Office / Office européen des brevets

(11) **EP 3 643 402 A1**

(12) **EUROPEAN PATENT APPLICATION**
published in accordance with Art. 153(4) EPC

(43) Date of publication:
**29.04.2020 Bulletin 2020/18**

(51) Int Cl.:
*B01J 23/44* (2006.01)   *B01J 21/04* (2006.01)
*B01J 21/06* (2006.01)   *B01J 21/18* (2006.01)
*B01J 27/24* (2006.01)   *B01J 29/068* (2006.01)
*B01J 32/00* (2006.01)   *B01J 37/02* (2006.01)
*C23C 28/04* (2006.01)   *H01M 4/66* (2006.01)

(21) Application number: 18820638.7

(22) Date of filing: 11.06.2018

(86) International application number:
**PCT/JP2018/022235**

(87) International publication number:
**WO 2018/235659 (27.12.2018 Gazette 2018/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 21.06.2017   JP 2017121528

(71) Applicant: **FUJIFILM Corporation
Tokyo 106-8620 (JP)**

(72) Inventor: **SAWADA Hirokazu
Shizuoka 421-0396 (JP)**

(74) Representative: **Hoffmann Eitle
Patent- und Rechtsanwälte PartmbB
Arabellastraße 30
81925 München (DE)**

(54) **COMPOSITE ALUMINUM MATERIAL**

(57) An object of the present invention is to provide an aluminum composite material having excellent adhesiveness between a support and a supported substance. The aluminum composite material of an embodiment of the present invention is an aluminum composite material having an oxide film-including aluminum base material having an oxide film on at least a part of a surface of an aluminum base material and a supported substance supported on the surface of the oxide film-including aluminum base material, in which an average film thickness of the oxide film is 1 nm or more and less than 100 nm, and the oxide film-side surface of the aluminum base material has at least one roughened structure selected from the group consisting of a roughened structure including concave portions having an average opening diameter of more than 5 $\mu$m and 100 $\mu$m or less, a roughened structure including concave portions having an average opening diameter of more than 0.5 $\mu$m and 5 $\mu$m or less, and an uneven structure including concave portions having an average opening diameter of more than 0.01 $\mu$m and 0.5 $\mu$m or less.

FIG. 1

**Description**

**BACKGROUND OF THE INVENTION**

1. Field of the Invention

The present invention relates to an aluminum composite material.

2. Description of the Related Art

Various materials are known for a support which supports a supported substance such as a catalyst.
For example, JP2007-245116A describes a porous alumina support which has at least one selected from the group consisting of a roughness having an average wavelength of 5 to 100 $\mu$m, a roughness having an average wavelength of 0.5 to 5 $\mu$m, and a roughness having an average wavelength of 0.01 to 0.5 $\mu$m on the surface thereof ([claim 1]).
In addition, JP2015-157272A describes "a catalyst support which has a structure obtained by winding spirally a stainless steel strip press-molded into a waveform or a roughened form and drilled with through-holes having yoke-like projections or burrs in the rim in the crests or troughs of the waveform or the roughened form, and has an aluminum oxide film formed on the surface of the stainless steel strip" ([claim 1]).

**SUMMARY OF THE INVENTION**

The present inventors have examined the carrier where a supported substance such as a catalyst, described in JP2007-245116A, JP2015-157272A, or the like is supported, and have revealed that they have problems in that the adhesiveness between a support and a supported substance is insufficient, and in particular, the supported substance is dropped off from the support in cases of long-term use, addition of a bending stress, or the like.
Therefore, an object of the present invention is to provide an aluminum composite material having excellent adhesiveness between a support and a supported substance.
The present inventors have conducted extensive studies to accomplish the object, and as a result, they have found that an oxide film-including aluminum base material which has an oxide film having a predetermined film thickness on at least a part of a surface of the aluminum base material, and has a predetermined roughened structure on the surface of the aluminum base material has excellent adhesiveness to the supported substance, thereby completing the present invention.
That is, the present inventors have found that the object can be accomplished by the following configurations.

[1] An aluminum composite material comprising:

an oxide film-including aluminum base material having an oxide film on at least a part of a surface of an aluminum base material; and
a supported substance supported on the surface of the oxide film-including aluminum base material,
in which an average film thickness of the oxide film is 1 nm or more and less than 100 nm, and
the oxide film-side surface of the aluminum base material has at least one roughened structure selected from the group consisting of a roughened structure including concave portions having an average opening diameter of more than 5 $\mu$m and 100 $\mu$m or less, an uneven structure including concave portions having an average opening diameter of more than 0.5 $\mu$m and 5 $\mu$m or less, and an uneven structure including concave portions having an average opening diameter of more than 0.01 $\mu$m and 0.5 $\mu$m or less.

[2] The aluminum composite material as described in [1],
in which a surface area difference $\Delta S$ in the oxide film-side surface of the aluminum base material is 10% or more, and the surface area difference $\Delta S$ is a value calculated by Equation (1) from an actual area $S_x$ determined from three-dimensional data obtained by performing measurements at $512 \times 512$ points in a 50 $\mu$m $\times$ 50 $\mu$m range on the surface using an atomic force microscope according to an approximate three-point method and a geometrically measured area So:

$$\Delta S = (S_x - S_0)/S_0 \times 100\ (\%) \ ... \ (1).$$

[3] The aluminum composite material as described in [1] or [2],

in which the supported substance is in the form of particles having an average equivalent circular diameter of less than 100 μm.

[4] The aluminum composite material as described in any one of [1] to [3],

in which a thermal conductivity of the supported substance is 100 to 2,000 W/m·K.

[5] The aluminum composite material as described in [4],

in which the supported substance is at least one selected from the group consisting of aluminum nitride particles, silver particles, carbon nanotubes, boron nitride nanotubes, copper particles, aluminum particles, graphite-copper composite material particles, and graphite-aluminum composite material particles.

[6] The aluminum composite material as described in any one of [1] to [3],

in which a thermal conductivity of the supported substance is 0.01 to 35 W/m·K.

[7] The aluminum composite material as described in [6],

in which the supported substance is at least one selected from the group consisting of alumina particles, hollow silica particles, calcium silicate particles, and cellulose fibers.

[8] The aluminum composite material as described in any one of [1] to [3],

in which a light absorptivity at a wavelength of 380 to 780 nm of the supported substance is 70% to 95%.

[9] The aluminum composite material as described in [8],

in which the supported substance is at least one selected from the group consisting of carbon black, graphite, a metal salt, organic fine particles, and glass beads.

[10] The aluminum composite material as described in any one of [1] to [3],

in which a light reflectance at a wavelength of 380 to 780 nm of the supported substance is 70% to 98%.

[11] The aluminum composite material as described in [10],

in which the supported substance is at least one selected from the group consisting of foamed polyethylene terephthalate, foamed polypropylene, alumina particles, titanium oxide particles, and zinc oxide particles.

[12] The aluminum composite material as described in [1] or [2],

in which the supported substance is a solid catalyst.

[13] The aluminum composite material as described in [12],

in which the solid catalyst is at least one kind of particles selected from the group consisting of 20%-of-Pd-containing carbon particles, copper-zinc oxide composite particles, Ni particles, platinum-alumina composite particles, Mo-V composite oxide particles, Co oxide particles, Mn oxide particles, Cr oxide particles, Fe oxide particles, Rh particles, Pd particles, and Ru particles.

[14] The aluminum composite material as described in [1] or [2],

in which the supported substance is in the form of antimicrobial particles.

[15] The aluminum composite material as described in [14],

in which the antimicrobial particles are at least one kind of particles selected from the group consisting of copper particles, zinc particles, silver particles, and particle having silver supported on zeolite.

[16] The aluminum composite material as described in any one of [1] to [3],

in which a volume resistivity of the supported substance is $10^9$ to $10^{14}$ Ω·cm.

[17] The aluminum composite material as described in [16],

in which the supported substance is at least one selected from the group consisting of mica, alumina particles, zirconia particles, and glass particles.

According to the present invention, it is possible to provide an aluminum composite material having excellent adhesiveness between a support and a supported substance.

## BRIEF DESCRIPTION OF THE DRAWING

Fig. 1 is a schematic cross-sectional view showing an example of an aluminum composite material of an embodiment of the present invention.

Fig. 2 is a schematic cross-sectional view showing an example of the roughened structure in the oxide film-side surface of the aluminum base material.

Fig. 3 is another schematic cross-sectional view showing an example of the roughened structure in the oxide film-side surface of the aluminum base material.

Fig. 4 is still another schematic cross-sectional view showing an example of the uneven structure in the oxide film-side surface of the aluminum base material.

Fig. 5 is a graph showing an example of a waveform diagram of an alternating waveform current used for an electrochemical surface-roughening treatment of the aluminum base material.

Fig. 6 is a schematic view showing an example of a radial type cell in an electrochemical surface-roughening treatment using an alternating current in the manufacture of the aluminum base material.

Fig. 7 is a side view showing the concept of a brush graining step used in a mechanical surface-roughening treatment in the manufacture of the aluminum base material.

## DESCRIPTION OF THE PREFERRED EMBODIMENTS

Hereinafter, the present invention will be described in detail.

Description of configuration requirements described below may be made on the basis of representative embodiments of the present invention in some cases, but the present invention is not limited to such embodiments. In addition, in the present specification, a numerical value range expressed using "to" is used in a meaning of a range that includes the preceding and succeeding numerical values of "to" as the lower limit value and the upper limit value, respectively.

The aluminum composite material of the embodiment of the present invention has an oxide film-including aluminum base material having an oxide film on at least a part of a surface of an aluminum base material and a supported substance supported on the surface of the oxide film-including aluminum base material (hereinafter also referred to as a "support").

Furthermore, in the aluminum composite material of the embodiment of the present invention, an average film thickness of the oxide film is 1 nm or more and less than 100 nm.

In addition, in the aluminum composite material of the embodiment of the present invention, the oxide film-side surface of the aluminum base material (hereinafter also referred to as "an oxide film-side surface") has at least one roughened structure (hereinafter also referred to as "a predetermined roughened structure" selected from the group consisting of an uneven structure including concave portions having an average opening diameter of more than 5 $\mu$m and 100 $\mu$m or less, an uneven structure including concave portions having an average opening diameter of more than 0.5 $\mu$m and 5 $\mu$m or less, and a roughened structure including concave portions having an average opening diameter of more than 0.01 $\mu$m and 0.5 $\mu$m or less.

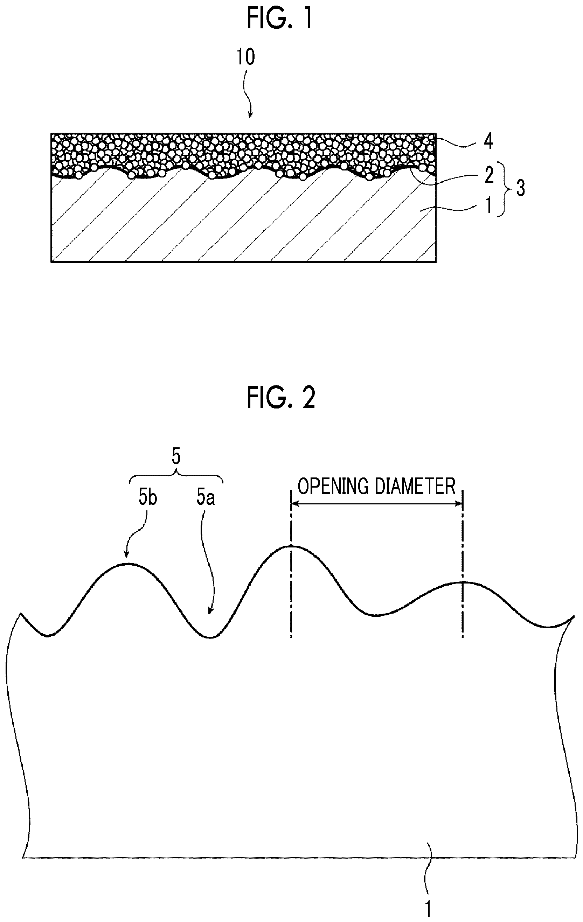

Fig. 1 is a schematic cross-sectional view illustrating an example of the aluminum composite material of the embodiment of the present invention.

An aluminum composite material 10 shown in Fig. 1 has an oxide film-including aluminum base material 3 having an oxide film 2 on the surface of an aluminum base material 1, and a supported substance 4 supported on the surface of the oxide film-including aluminum base material 3.

In addition, in the aluminum composite material 10 shown in Fig. 1, the oxide film-side surface of the aluminum base material 1 has a predetermined roughened structure.

In the present invention, in the oxide film-including aluminum base material having an oxide film having a predetermined film thickness on at least a part of a surface of the aluminum base material as described above, the adhesiveness to the supported substance becomes good by providing the oxide film-side surface of the aluminum base material with a predetermined roughened structure.

Details thereof are not clear, but are presumed as follows by the present inventors.

That is, it is considered that by providing the surface of the aluminum base material with a predetermined roughened structure, it becomes easy for the supported substance to be entirely maintained; by providing the surface of the aluminum base material with an oxide film having a predetermined film thickness, in a case where the supported substance is supported by pressurization or the like, the oxide film is not peeled and the oxide film can be partly torn by the supported substance; and as a result, the supported substance partly penetrates into the surface of the aluminum base material, whereby the adhesiveness becomes good.

Hereinafter, the respective components of the aluminum composite material of the embodiment of the present invention will be described in detail.

[Aluminum Base Material]

The aluminum base material contained in the aluminum composite material of the embodiment of the present invention is not particularly limited, and specific examples thereof include a pure aluminum base material; an alloy base material having aluminum as a main component (more than 50% by mass) and trace amounts of foreign elements; a base material in which high-purity aluminum is deposited onto low-purity aluminum (for example, a recycled material); and a base material in which high-purity aluminum is coated onto the surface of a silicon wafer, quartz, glass, or the like by a method such as vapor deposition and sputtering.

In addition, specific examples of the foreign elements which may be included in the alloy base material include silicon, iron, copper, manganese, magnesium, chromium, zinc, bismuth, nickel, and titanium, and the content of the foreign elements in the alloy is preferably 10% by mass or less.

In addition, from the viewpoint of uniformity of the surface treatment which will be described later, or the like, the purity of aluminum constituting the base material is preferably 97% or more, more preferably 98% or more, still more preferably 99% or more, and particularly preferably 99.5% or more.

As the aluminum base material, materials known in the related art, for example, as described in 4th Edition of Aluminum Handbook (published in 1990 by the Japan Light Metal Association) can be used, and specifically, Al-Mn-based aluminum base materials such as JIS A1050, JIS A1100, JIS A1070, Mn-containing JIS A3004, and International Alloy Designation 3103A can be appropriately used.

Furthermore, from the viewpoint of improving the tensile strength, an Al-Mg-based alloy or an Al-Mn-Mg-based alloy (JIS A3005), obtained by the addition of 0.1% by mass or more of magnesium, can also be used.

In addition, an Al-Zr-based alloy obtained by the addition of Zr, an Al-Si-based alloy obtained by the addition of Si, or an Al-Mg-Si-based alloy obtained by the addition of Mg and Si can also be used.

In order to form the aluminum alloy into a plate material, for example, the following method can be adopted.

First, an aluminum alloy melt prepared such that the melt is prepared to a predetermined alloy component content is subjected to a cleaning treatment according to an ordinary method, and casted.

Examples of the cleaning treatment include a flux treatment or a degassing treatment using an argon gas, a chlorine gas, or the like, which is intended to remove unwanted gases such as hydrogen in the melt; a filtering treatment using a so-called rigid media filter such as a ceramic tube filter and a ceramic foam filter, a filter using alumina flakes, alumina balls, or the like as a medium, a glass cloth filter, or the like; and a treatment with a combination of the degassing treatment and the filtering treatment.

It is preferable to carry out these cleaning treatments in order to prevent defects caused by non-metallic inclusions in the melt, or foreign matters such as oxides, or defects caused by gases dissolved in the melt.

Next, casting is performed using the melt which has been subjected to the cleaning treatment as described above.

As a casting method, there are a casting method which uses a fixed mold typified by a direct chill (DC) casting method and a casting method which uses a driving mold typified by a continuous casting method, any of which may be used.

In a case where the DC casting is performed, it is possible to produce an ingot having a plate thickness of 300 to 800 mm. This ingot is scalped according to an ordinary method, as desired, and the surface layer is usually cut to 1 to 30 mm, and preferably cut to 1 to 10 mm. The ingot is subjected to a soaking treatment either before or after scalping, as desired. Thereafter, hot rolling or cold rolling is performed to obtain a rolled plate of an aluminum base material. Before, after, or during the hot rolling, an intermediate annealing treatment may be performed. For a condition for the intermediate annealing treatment, a batch-type annealing furnace or a continuous annealing furnace can be used.

The aluminum base material finished into a predetermined thickness by the above-mentioned steps may be treated by a leveling apparatus such as a roller leveler and a tension leveler to improve the flatness.

Improvement of the flatness may be performed after the aluminum base material is cut into a sheet form, but in order to improve productivity, it is preferable to improve the flatness of the aluminum base material in the state of a continuous coil.

In addition, the aluminum base material may be passed through a slitter line so as to be formed into a predetermined plate width.

Furthermore, a thin oil film may be provided on the surface of the aluminum base material in order to prevent occurrence of scuffing due to friction between the aluminum base materials. As the thin oil film, either a volatile oil film or a non-volatile oil film is suitably used, as desired.

In the present invention, the aluminum base material may be in the form of an aluminum web or a cut sheet.

In addition, the thickness of the aluminum base material is preferably approximately 0.01 to 1.0 mm, more preferably 0.02 to 0.5 mm, and still more preferably 0.1 to 0.4 mm. The thickness can be appropriately modified depending on the application of the supported substance.

[Roughened Structure]

The oxide film-side surface of the aluminum base material has at least one roughened structure selected from the group consisting of an uneven structure including concave portions having an average opening diameter of more than 5 $\mu$m and 100 $\mu$m or less (hereinafter also referred to as a "large-wave structure"), an uneven structure including concave portions having an average opening diameter of more than 0.5 μm and 5 μm or less (hereinafter also referred to as a "medium-wave structure"), and a roughened structure including concave portions having an average opening diameter of more than 0.01 μm and 0.5 μm or less (hereinafter also referred to as a "small-wave structure").

Here, methods for measuring an average opening diameter of the large-wave structure, the medium-wave structure, and the small-wave structure are as follows.

(1) Average Opening Diameter of Large-Wave Structure

Two-dimensional roughness measurement was performed using a stylus-type roughness tester, an average spacing Sm as defined in ISO 4287 was measured five times, and an average value thereof was taken as an average opening diameter.

In addition, the average opening diameter of the large-wave structure is preferably 8 to 80 μm, and more preferably 10 to 70 μm.

(2) Average Opening Diameter of Medium-Wave Structure

An image was taken right above the surface of the aluminum base material using a high resolution scanning electron microscope (SEM) at a magnification of 2,000×, and in the obtained SEM image, at least 50 concave portions having the medium-wave structure in which the circumferences are connected in an annular shape were extracted, their diameters were read and taken as the opening diameters, and an average opening diameter thereof was calculated.

In addition, the average opening diameter of the medium-wave structure is preferably 1 to 5 μm, and more preferably 2 to 4 μm.

(3) Average Opening Diameter (Average Wavelength) of Small-Wave Structure

An image was taken right above the surface of the aluminum base material using a high resolution scanning electron microscope (SEM) at a magnification of 50,000×, and in the obtained SEM image, at least 50 concave portions having the small-wave structure were extracted, their diameters were read and taken as the opening diameters, and an average opening diameter thereof was calculated.

In addition, the average opening diameter of the small-wave structure is preferably 0.02 to 0.40 μm, and more preferably 0.05 to 0.20 μm.

In Figs. 2 to 4, a schematic cross-sectional view of an example of the roughened structure in the oxide film-side surface of the aluminum base material is shown.

The oxide film-side surface of the aluminum base material 1 shown in Fig. 2 has the surface of a roughened structure (large-wave structure) 5 including a concave portion 5a and a convex portion 5b, having an average opening diameter of more than 5 μm and 100 μm or less.

Here, as shown in Fig. 2, the opening diameter of the concave portion 5a is a diameter of the concave portion 5a (the circumferences connected in an annular shape to form the concave portion 5a), and an average opening diameter is an average thereof.

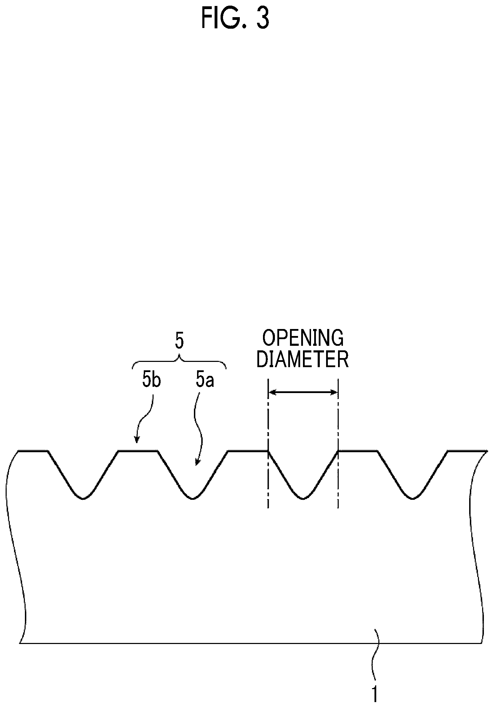

In addition, the roughened structure including the concave portion may be either a waveform structure as shown in Fig. 2 or a repeating structure of concave portions, in which the convex portion 5b is configured with a flat portion of the surface as shown in Fig. 3.

In the present invention, for a reason that the adhesiveness to the supported substance becomes better, it is preferable that the oxide film-side surface has a roughened structure in which at least two structures of the large-wave structure, the medium-wave structure, and the small-wave structure are superimposed with each other, and it is more preferable that the oxide film-side surface has a roughened structure in which the three structures are superimposed with each other.

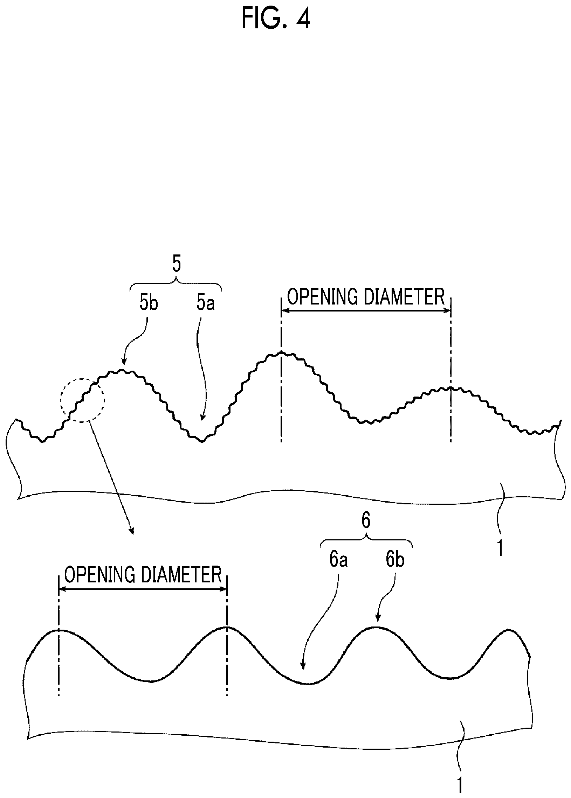

Specifically, as shown in Fig. 4, it is preferable that the oxide film-side surface of the aluminum base material 1 has a roughened structure in which a roughened structure (medium-wave structure) 6 including a concave portion 6a and a convex portion 6b, having an average opening diameter of more than 0.5 μm and 5 μm or less, is superimposed with the roughened structure (large-wave structure) 5 including the concave portion 5a and the convex portion 5b, having an average opening diameter of more than 5 μm and 100 μm or less.

Here, in the roughened structure in which the medium-wave structure is superimposed with the large-wave structure, it is preferable that the medium-wave structure is uniformly formed on the surface of the large-wave structure as shown in Fig. 4. Further, although not shown in drawing, in a case where a small-wave structure is included and the small-wave structure and the medium-wave structure are superimposed with each other, it is preferable that the small-wave structure is uniformly formed on the surface of the medium-wave structure; and in a case where the small-wave structure and the large-wave structure are superimposed with each other, it is preferable that the small-wave structure is uniformly formed on the surface of the large-wave structure.

[Surface Area Difference $\Delta S$]

In the present invention, for a reason that the adhesiveness to the supported substance becomes better, the surface area difference $\Delta S$ in the oxide film-side surface of the aluminum base material is preferably 10% or more, more preferably 20% or more, and still more preferably 30% or more.

Here, the surface area difference $\Delta S$ is a value calculated by Equation (1) from an actual area $S_x$ determined from three-dimensional data obtained by performing measurements at $512 \times 512$ points in a 50 $\mu$m$\times$50 $\mu$m range on the surface using an atomic force microscope according to an approximate three-point method and a geometrically measured area So:

$$\Delta S=(S_x-S_0)/S_0\times100\ (\%)\ ...\ (1).$$

In the present invention, in order to determine the surface area difference $\Delta$, a surface profile is measured with an atomic force microscope (AFM) to obtain three-dimensional data, thereby determining $\Delta S$. The measurement can be performed, for example, under the following conditions.

That is, a 1-cm square sample is cut out from an aluminum base material and placed on a horizontal sample holder on a piezo scanner, a cantilever is allowed to approach the surface of the sample; and at a time point of the cantilever reaching the zone where an interatomic force works, the surface of the sample is scanned in the X and Y directions and the roughness of the sample at this time is examined based on a displacement in the Z direction. A piezo scanner capable of scanning 150 $\mu$m in the X and Y directions and 10 $\mu$m in the Z direction is used. A cantilever having a resonance frequency of 120 to 150 kHz and a spring constant of 12 to 20 N/m (SI-DF20, manufactured by NANOPROBE) is used to perform the measurement in a dynamic force mode (DFM). In addition, the obtained three-dimensional data is approximated by the least-squares method to compensate for slight tilting of the sample and determine a reference plane. Measurements are performed at $512 \times 512$ points in a 50 $\mu$m$\times$50 $\mu$m range on the surface. The resolutions are 0.1 $\mu$m in the X and Y directions and 1 nm in the Z direction, respectively, and the scan rate is 60 $\mu$m/sec.

Using the three-dimensional data (f(x,y)) obtained above, adjacent three points are extracted and a total sum of the areas of microtriangles formed by the three points is determined and taken as an actual area $S_x$. The surface area difference $\Delta S$ is then determined by Equation (1) from the obtained actual area $S_x$ and the geometrically measured area $S_0$.

[Method for Manufacturing Aluminum Base Material]

A method for manufacturing the aluminum base material is not particularly limited as long as the above-mentioned roughened structure can be formed on the surface of the oxide film, but examples thereof include a method in which a surface treatment including a surface-roughening treatment is carried out.

<Surface Treatment>

Typical examples of a method for forming the above-mentioned surface profile include a method in which an aluminum base material is subjected to a mechanical surface-roughening treatment, an alkali etching treatment, a desmutting treatment with an acid, and an electrochemical surface-roughening treatment using an electrolytic liquid in this order; a method in which an aluminum base material is subjected to a mechanical surface-roughening treatment, an alkali etching treatment, a desmutting treatment with an acid, and a plurality of cycles of electrochemical surface-roughening treatments using different electrolytic liquids; a method in which an aluminum base material is subjected to an alkali etching treatment, a desmutting treatment with an acid, and an electrochemical surface-roughening treatment using an electrolytic liquid in this order; and a method in which an aluminum base material is subjected to an alkali etching treatment, a desmutting treatment with an acid, and a plurality of cycles of electrochemical surface-roughening treatments using different electrolytic liquids, but the present invention is not limited thereto. In these methods, after the electrochemical surface-roughening treatment, an alkali etching treatment and a desmutting treatment with an acid may further be carried out.

Specifically, the method depends on the conditions for the other treatments (an alkali etching treatment and the like), but suitable examples of the method for forming a surface profile in which a large-wave structure, a medium-wave structure, and a small-wave structure are sequentially superimposed include a method in which a mechanical surface-roughening treatment, an electrochemical surface-roughening treatment using an electrolytic liquid formed primarily of nitric acid, and an electrochemical surface-roughening treatment using an electrolytic liquid formed primarily of hydrochloric acid are performed in this order.

Hereinafter, the respective steps of the surface treatment are described in detail.

(Mechanical Surface-Roughening Treatment)

The mechanical surface-roughening treatment is effective as a means for the surface-roughening treatment for forming the large-wave structure since the treatment is capable of forming a roughened structure including concave portions having an average opening diameter of more than 5 $\mu$m and 100 $\mu$m or less at lower cost, as compared with the electrochemical surface-roughening treatment.

As the mechanical surface-roughening treatment, for example a brush graining method in which a surface of aluminum is scratched with a metal wire, a ball graining method in which a surface of aluminum is grained with abrasive balls and an abrasive, or the brush graining method described in JP1994-135175A (JP-H06-135175A) and JP1975-040047A (JP-S50-040047A), in which a surface is grained with a nylon brush and an abrasive can be used.

In addition, a transfer method in which a roughened surface is pressed against an aluminum base material can also be used. That is, the methods described in JP1994-055871A (JP-H06-055871A) in which transfer is performed a plurality of times and the method described in JP1994-024168A (JP-H06-024168A) in which a surface is elastic can also be applied, in addition to the methods described in each of JP1980-074898A (JP-S55-074898A), JP1985-036195A (JP-S60-036195A), and JP1985-203496A (JP-S60-203496A).

In addition, as the mechanical surface-roughening treatment, the methods described in JP1986-162351A (JP-H61-162351A), JP1988-104889A (JP-S63-104889A), and the like can also be used.

In the present invention, each of the above-mentioned methods can also be used in combination, taking into account productivity and the like.

Hereinafter, the brush graining method which is suitably used as the mechanical surface-roughening treatment will be described.

The brush graining method is generally a method in which one or both of the surfaces of the aluminum base material are scrubbed while spraying a slurry liquid containing an abrasive over a rotating roller-like brush, using a roller-like brush in which a large number of brush hairs such as synthetic resin hairs made of a synthetic resin such as nylon (trademark), propylene, and a vinyl chloride resin are implanted on the surface of a cylindrical body.

An abrasive roller having an abrasive layer provided on the surface thereof can also be used instead of the roller-like brush and the slurry liquid.

In a case of using the roller-like brush, brush hairs having a bending elastic modulus of preferably 1,000 to 4,000 kg/cm$^2$, and more preferably 1,500 to 3,500 kg/cm$^2$ and a bristle elasticity strength of preferably 5 N or less, and more preferably 4 N or less are used. The diameter of the brush hair is generally 0.2 to 0.9 mm. While the length of the brush hairs can be appropriately determined depending on the outer diameter and the diameter of the body of the roller-like brushes, but is generally 10 to 100 mm.

As the abrasive, known abrasives can be used. For example, an abrasive such as pumice stone, silica sand, aluminum hydroxide, alumina powder, silicon carbide, silicon nitride, volcanic ash, carborundum, and emery; or a mixture thereof can be used.

Examples of an apparatus suitable for the mechanical surface-roughening treatment include the apparatus described in JP1975-040047B (JP-S50-040047B).

(Electrochemical Surface-Roughening Treatment)

For the electrochemical surface-roughening treatment (hereinafter also referred to as an "electrolytic surface-roughening treatment"), an electrolytic liquid which is used for an ordinary electrochemical surface-roughening treatment using an alternating current can be used. Among those, an electrolytic liquid formed primarily of hydrochloric acid or nitric acid is preferably used since the above-mentioned surface profile is readily obtained.

The electrolytic surface-roughening treatment can be carried out in accordance with, for example, the electrochemical graining method (electrolytic graining method) described in JP1973-028123B (JP-S48-028123B) and GB896563B. For the electrolytic graining method, a sinusoidal alternating current is used but the electrolytic graining method may also be performed using the special waveforms described in JP1977-058602A (JP-S52-058602A). Further, the waveforms described in JP1991-079799A (JP-H03-079799A) can also be used. In addition, the method described in each of JP1980-158298A (JP-S55-158298A), JP1981-028898A (JP-S56-028898A), JP1977-058602A (JP-S52-058602A), JP1977-152302A (JP-S52-152302A), JP1979-085802A (JP-S54-085802A), JP1985-190392A (JP-S60-190392A), JP1983-120531A (JP-S58-120531A), JP1988-176187A (JP-S63-176187A), JP1989-005889A (JP-H01-005889A), JP1989-280590A (JP-H01-280590A), JP1989-118489A (JP-H01-118489A), JP1989-148592A (JP-H01-148592A), JP1989-178496A (JP-H01-178496A), JP1989-188315A (JP-H01-188315A), JP1989-154797A (JP-H01-154797A), JP1990-235794A JP-H02-235794A), JP1991-260100A (JP-H03-260100A), JP1991-253600A (JP-H03-253600A), JP1992-072079A (JP-H04-072079A), JP1992-072098A (JP-H04-072098A), JP1991-267400A (JP-H03-267400A), and JP1989-141094A (JP-H01-141094A) can also be applied. Moreover, in addition to the above-mentioned methods, electrolysis using alternating currents with a special frequency, which has also been proposed as a method for producing an electrolytic capacitor, can also be performed. These are described in, for example, JP1983-207400A (JP-S58-207400A), US4276129A, and US4676879A.

Various electrolytic cells and power supplies have been proposed, but the electrolytic cells and the power supplies described in each of US4203637A, JP1981-123400A (JP-S56-123400A), JP1982-059770A (JP-S57-059770A), JP1978-012738A (JP-S53-012738A), JP1978-032821A (JP-S53-032821A), JP1978-032822A (JP-S53-032822A), JP1978-032823A (JP-S53-032823A), JP1980-122896A (JP-S55-122896A), JP1980-132884A (JP-S55-132884A), JP1987-127500A (JP-S62-127500A), JP1989-052100A (JP-H01-052100A), JP1989-052098A (JP-H01-052098A), JP1985-067700A (JP-S60-067700A), JP1989-230800A (JP-H01-230800A), and JP1991-257199A (JP-H03-257199), and the like can also be used. In addition, but the electrolytic cells and the power supplies described in each of JP1977-058602A (JP-S52-058602A), JP1977-152302A (JP-S52-152302A), JP1978-012738A (JP-S53-012738A), JP1978-012739A (JP-S53-012739A), JP1978-032821A (JP-S53-032821A), JP1978-032822A (JP-S53-032822A), JP1978-032833A (JP-S53-032833A), JP1978-032824A (JP-S53-032824A), JP1978-032825A (JP-S53-032825A), JP1979-085802A (JP-S54-085802A), JP1980-122896A (JP-S55-122896A), JP1980-132884A (JP-S55-132884A), JP1973-028123A (JP-S48-028123A), JP1976-007081A (JP-S51-007081A), JP1977-133838A (JP-S52-133838A), JP1977-133840A (JP-S52-133840A), JP1977-133844A (JP-S52-133844A), JP1977-133845A (JP-S52-133845A), JP1978-149135A (JP-S53-149135A), JP1979-146234A (JP-S54-146234A), and the like can also be used.

In addition to nitric acid and hydrochloric acid, as the acidic solution which is an electrolytic liquid, the electrolytic liquids described in each specification of US4671859A, US4661219A, US4618405A, US4600482A, US4566960A, US4566958A, US4566959A, US4416972A, US4374710A, US4336113A, US4184932A, and the like can also be used.

The concentration of the acidic solution is preferably 0.5% to 2.5% by mass, but in consideration of a use in the smut removing treatment, the concentration is particularly preferably 0.7% to 2.0% by mass. In addition, the liquid temperature is preferably 20°C to 80°C, and more preferably 30°C to 60°C.

The aqueous solution formed primarily of hydrochloric acid or nitric acid can be used after the addition of at least one of a nitrate ion-containing nitric acid compound such as aluminum nitrate, sodium nitrate, and ammonium nitrate, or a chloride ion-containing hydrochloric acid compound such as aluminum chloride, sodium chloride, and ammonium chloride to an aqueous solution of hydrochloric acid or nitric acid at a concentration of 1 to 100 g/L within a range from 1 g/L to saturation can be used. In addition, metals which are included in an aluminum alloy with iron, copper, manganese, nickel, titanium, magnesium, silica, or the like may be dissolved in the aqueous solution formed primarily of hydrochloric acid or nitric acid. It is preferable to use a solution prepared by adding aluminum chloride, aluminum nitrate, or the like to an aqueous solution of hydrochloric acid or nitric acid at a concentration of 0.5% to 2% by mass such that the aluminum ion concentration reaches 3 to 50 g/L.

Moreover, by using the solution after the addition of a compound capable of forming a complex with Cu, it is possible to perform uniform graining even with regard to an aluminum base material containing a high Cu content. Examples of the compound capable of forming a complex with Cu include ammonia; amines obtained by substituting the hydrogen atom of ammonia such as methylamine, ethylamine, dimethylamine, diethylamine, trimethylamine, cyclohexylamine, triethanolamine, triisopropanolamine, and ethylenediamine tetraacetate (EDTA) with a hydrocarbon group (of an aliphatic, aromatic, or other nature); and metal carbonates such as sodium carbonate, potassium carbonate, and potassium hydrogen carbonate. Other examples thereof include ammonium salts such as ammonium nitrate, ammonium chloride, ammonium sulfate, ammonium phosphate, and ammonium carbonate. The temperature is preferably 10°C to 60°C, and more preferably 20°C to 50°C.

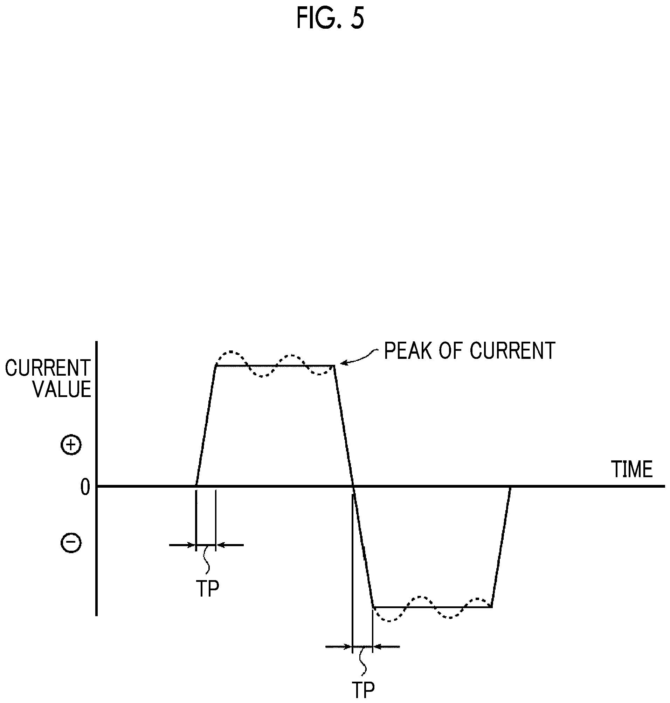

The alternating current power supply wave used in the electrochemical surface-roughening treatment is not particularly limited, a sinusoidal wave, a square wave, a trapezoidal wave, a triangular wave, or the like is used, but the square wave or the trapezoidal wave is preferable, and the trapezoidal wave is particularly preferable. The trapezoidal wave refers to a wave shown in Fig. 5. In this trapezoidal wave, the time (TP) for the current value to increase from zero up to a peak is preferably 1 to 3 msec.

A duty ratio of the alternating current with the trapezoidal wave of 1:2 to 2:1 can be used, but as described in JP1993-195300A (JP-H05-195300A), in an indirect power feed system which does not use a conductor roll for aluminum, the duty ratio is preferably 1:1. A frequency of the alternating current with a trapezoidal wave of 0.1 to 120 Hz can be used, but the frequency is preferably 50 to 70 Hz from the viewpoint of the equipment.

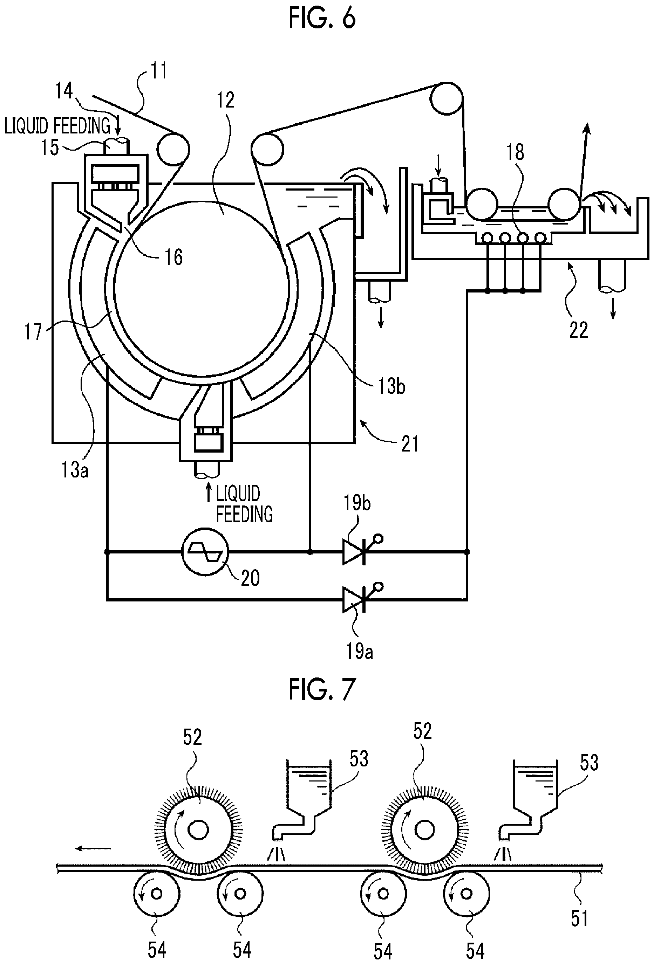

One or more alternating current power supplies can be connected to the electrolytic cell. For the purposes of controlling the anode/cathode current ratio of the alternating current applied to the aluminum base material facing the main electrodes, performing uniform graining, and dissolving carbon of the main electrodes, it is preferable to install an auxiliary anode and divert some of the alternating current as shown in Fig. 6. In Fig. 6, 11 is an aluminum base material, 12 is a radial drum roller, 13a and 13b are main electrodes, 14 is an electrolytic treatment liquid, 15 is an electrolytic liquid feed inlet, 16 is a slit, 17 is an electrolytic liquid channel, 18 is an auxiliary anode, 19a and 19b are thyristors, 20 is an alternating current power supply, 21 is a main electrolytic cell, and 22 is an auxiliary anode cell. By diverting some of the current values as a direct current to an auxiliary anode provided in a cell different from a cell having the two main electrodes through a rectifying device or a switching device, it is possible to control a ratio between the current value furnished for the anodic reaction which acts on the aluminum base material facing the main electrodes and the current value furnished for the cathodic reaction. The ratio between the amount of electricity furnished for the anodic reaction and the amount of electricity furnished for the cathodic reaction on the aluminum base material facing the main electrodes (the amount of electricity in a case where the aluminum base material serves as a cathode/the amount of electricity in a case where the aluminum base material serves as an anode) is preferably 0.3 to 0.95.

As the electrolytic cell, known electrolytic cells which are used for surface treatments, such as a vertical, flat, and radial type electrolytic cells, can be used but the radial type electrolytic cells described in JP1993-195300A (JP-H05-195300A) are particularly preferable. The electrolytic liquid which is passed through the electrolytic cell may be either parallel or counter to the direction in which aluminum web advances.

(Nitric Acid Electrolysis)

A medium-wave structure having an average opening diameter of more than 0.5 $\mu$m and 5 $\mu$m or less can be formed by the electrochemical surface-roughening treatment using an electrolytic liquid formed primarily of nitric acid. It should be noted that in a case where the amount of electricity is made relatively large, the electrolytic reaction concentrates, and thus, a large-wave structure having a wavelength of more than 5 $\mu$m is also produced.

In a case where a medium-wave structure having an average opening diameter of more than 0.5 $\mu$m and 5 $\mu$m or less is formed, a total sum of the amount of electricity furnished to the anodic reaction on the aluminum base material at a point of time of the completion of the electrolytic reaction is preferably 10 to 350 C/dm$^2$, and more preferably 50 to 300 C/dm$^2$. The current density at this time is preferably 10 to 100 A/dm$^2$.

In a case where a large-wave structure having an average opening diameter of more than 5 $\mu$m is formed, the total amount of electricity furnished to the anodic reaction on the aluminum base material is preferably 350 to 1,000 C/dm$^2$, and more preferably 400 to 800 C/dm$^2$. The current density at this time is preferably 10 to 100 A/dm$^2$.

In addition, it is also possible to form a small-wave structure having an average wavelength of 0.20 $\mu$m or less by performing electrolysis at a temperature of 30°C to 60°C using a high-concentration electrolytic liquid, for example, an electrolytic liquid having a nitric acid concentration of 15% to 35% by mass, or by performing electrolysis at a high temperature, for example, 80°C or higher using a nitric acid electrolytic liquid having a nitric acid concentration of 0.7% to 2% by mass.

(Hydrochloric Acid Electrolysis)

Hydrochloric acid by itself has a strong ability to dissolve aluminum, and therefore, it is possible to form a fine small-wave structure on the surface only with the application of just a slight degree of electrolysis. This fine small-wave structure has an average opening diameter of more than 0.01 $\mu$m and 0.5 $\mu$m or less, and is uniformly produced over the entire surface of the aluminum base material.

In order to obtain such the surface profile, the total amount of electricity furnished to the anodic reaction on the aluminum base material at a point of time of the completion of the electrolytic reaction is preferably 1 to 100 C/dm$^2$, and more preferably 20 to 80 C/dm$^2$. The current density at this time is preferably 10 to 50 A/dm$^2$.

In such the electrochemical surface-roughening treatment with an electrolytic liquid formed primarily of hydrochloric acid, it is possible to form large crater-like undulations at the same time by increasing the total amount of electricity furnished to the anodic reaction to 350 to 1,000 C/dm$^2$.

It is effective to provide a multiplicity of small roughness on the surface in order to increase the surface area difference $\Delta$S. Suitable examples of a method for providing the multiplicity of small roughness on the surface as described above include an electrolysis method in which an electrolytic treatment is performed in an electrolytic liquid formed primarily of hydrochloric acid to form a small-wave structure including concave portions having an average opening diameter of more than 0.01 $\mu$m and 0.5 $\mu$m or less. It is certain that it is effective to superimpose a large-wave structure, a medium-wave structure, and a small-wave structure on each other for an increase in the surface area difference $\Delta$S.

(Alkali Etching Treatment)

The alkali etching treatment is a treatment in which the surface layer of the aluminum base material is brought into contact with an alkali solution and dissolved.

In a case where a mechanical surface-roughening treatment has not been performed, the purpose of the alkali etching treatment performed prior to the electrolytic surface-roughening treatment is to remove rolling oils, contaminants, a natural oxide film, or the like from the surface of the aluminum base material (rolled aluminum), and in a case where the mechanical surface-roughening treatment has already been performed, the alkali etching treatment is performed for the purpose of dissolving the edge portions of the roughness produced by the mechanical surface-roughening treatment to transform the steep roughness into a smoothly undulating surface.

In a case where the mechanical surface-roughening treatment has not been performed prior to the alkali etching treatment, the amount of etching is preferably 0.1 to 10 $g/m^2$, and more preferably 1 to 5 $g/m^2$. In a case where the amount of etching is 1 to 10 $g/m^2$, removal of rolling oils on a surface, contaminants, a natural oxide film, or the like is sufficiently performed.

In a case where the mechanical surface-roughening treatment has been performed prior to the alkali etching treatment, the amount of etching is preferably 3 to 20 $g/m^2$, and more preferably 5 to 15 $g/m^2$.

The alkali etching treatment performed immediately after the electrolytic surface-roughening treatment is performed for the purpose of dissolving a smut produced in the acidic electrolytic liquid and dissolving the edge portions of the roughness formed by the electrolytic surface-roughening treatment. Since the roughness formed by the electrolytic surface-roughening treatment varies depending on the type of electrolytic liquid, the optimal amount of etching also varies, but the amount of etching in alkali etching treatment carried out after the electrolytic surface-roughening treatment is preferably 0.1 to 5 $g/m^2$. In a case of using a nitric acid electrolytic liquid, it is necessary to set the amount of etching to be larger than that in a case of using a hydrochloric acid electrolytic liquid. In a case where the electrolytic surface-roughening treatment is performed a plurality of times, the alkali etching treatment can be performed, as desired, after each of the treatments.

Examples of the alkali used for the alkali solution include a caustic alkali and an alkali metal salt. In particular, an aqueous solution of sodium hydroxide is preferable.

The concentration of the alkali solution can be determined depending on the amount of etching, and is preferably 1% to 50% by mass, and more preferably 10% to 35% by mass. In a case where aluminum ions are dissolved in the alkali solution, the concentration of the aluminum ions is preferably 0.01% to 10% by mass, and more preferably 3% to 8% by mass. The temperature of the alkali solution is preferably 20°C to 90°C. The treatment time is preferably 1 to 120 seconds.

Examples of a method for bringing the aluminum base material into contact with the alkali solution include a method in which an aluminum base material is passed through a tank filled with an alkali solution, a method in which an aluminum base material is immersed in a tank filled with an alkali solution, and a method in which an alkali solution is sprayed onto the surface of the aluminum base material.

(Desmutting Treatment)

After the electrolytic surface-roughening treatment or the alkali etching treatment is performed, it is preferable to perform acid washing (desmutting treatment) in order to remove corrosive organisms remaining on the surface.

The acid used is generally, for example, nitric acid, sulfuric acid, hydrochloric acid, or the like, but other acids may also be used.

The desmutting treatment is performed, for example, by bringing the aluminum base material into contact with an acidic solution having a concentration of hydrochloric acid, nitric acid, sulfuric acid, or the like of 0.5% to 30% by mass (containing 0.01% to 5% by mass of aluminum ions).

Examples of a method for bringing the aluminum base material into contact with the acidic solution include a method in which an aluminum base material is passed through a tank filled with an acidic solution, a method in which an aluminum base material is immersed in a tank filled with the acidic solution, and a method in which an acidic solution is sprayed onto the surface of an aluminum base material.

Since the state of the surface of the aluminum base material after the desmutting treatment affects the subsequent natural oxide film growth, selection of an acid, a concentration, and a temperature condition are appropriately selected depending on the purpose.

(Water Washing Treatment)

It is necessary to perform water washing after the completion of the steps of the above-mentioned treatments. In particular, since water washing performed at the end of the step affects the subsequent natural oxide film growth, it is necessary to sufficiently perform the washing using pure water, ground water, tap water, or the like.

(Drying)

After performing the last water washing treatment, it is important to rapidly remove or dry the moisture on the surface.

(Storage)

Since the condition for storage after the water washing and the drying also affects the natural oxide film growth on the surface, the condition is also important in the present invention.

[Oxide Film]

The oxide film contained in the aluminum composite material of the embodiment of the present invention is a so-called natural oxide film which is formed on at least a part of a surface of the above-mentioned aluminum base material.

In the present invention, the average film thickness of the oxide film is 1 nm or more and less than 100 nm, preferably 1 to 50 nm, and more preferably 1 to 20 nm.

Here, the "average film thickness" of the oxide film is calculated as an average value of values measured at ten points by cutting an aluminum composite material or an oxide film-including aluminum base material in the thickness direction with focused ion beams (FIB), obtaining a cross-section thereof by taking a surface picture (an magnification: 100,000$\times$ to 1,300,000$\times$) with a transmission electron microscope (TEM). In addition, the magnification was appropriately changed to a magnification at which measurement is easily performed in the range, depending on the thickness of the oxide film.

[Supported Substance]

The supported substance contained in the aluminum composite material of the embodiment of the present invention is a supported substance supported on the surface of the oxide film-including aluminum base material, but is not particularly limited since the supported substance is appropriately determined depending on the purpose.

Examples of the supported substance include a catalyst; particles formed of an inorganic material or organic material having excellent characteristics such as a thermal conductivity, an absorbance, and a reflectance; and an antimicrobial agent, but the supported substance can be appropriately used depending on the purpose.

[Catalyst]

In a case where a catalyst is used as the supported substance, it is preferable to use a solid catalyst.

Examples of the solid catalyst include metal catalysts (for example, Pt-Re/AL2O3, Pd/C, Cu/ZnO, and Ni), metal oxide catalysts (for example, Mo-V composite oxides, Co and Mn oxides, Cr and Fe oxides, zeolite, and heteropolyacids), complex catalysts (for example, Rh, Ru, and Pd complexes), sulfides (for example, molybdenum sulfide), and chlorides (for example, iron (III) chloride).

Specifically, at least one kind of particles selected from the group consisting of 20%-of-Pd-containing carbon particles, copper-zinc oxide composite particles, Ni particles, platinum-alumina composite particles, Mo-V composite oxide particles, Co oxide particles, Mn oxide particles, Cr oxide particles, Fe oxide particles, Rh particles, Pd particles, and Ru particles are preferable for a reason that those are easily used in the form of particles.

[Particles]

In a case where particles are used as the supported substance, it is preferable to use particles having an average equivalent circular diameter of less than 100 $\mu$m for a reason that they are easily maintained to have the above-mentioned roughened structure. Hereinafter, the particles used as the supported substance are simply referred to as "supported substance particles".

Here, the average equivalent circular diameter refers to an average value of main-plane diameters (maximum lengths) of any 200 flat-plate particles selected from an image obtained by observing the particles with a field emission scanning electron microscope (FE-SEM).

In a case where the thermal conductivity is improved with the supported substance particles, the supported substance particles are preferably particles in which a thermal conductivity of the supported substance is 100 to 2,000 W/m·K from the viewpoint that the thermal conductivity is adjusted to equivalent to or sufficiently higher than the thermal conductivity of aluminum alone of 236 W/m·K.

Here, the thermal conductivity refers to a value corresponding to the amount of heat flowing per second in a case where there is a temperature difference of 1°C at both ends of a plate having a unit length and a unit area, and can be measured using a method specified in JIS A 1412-2, such as a guarded hot plate method (GHP method), a heat flow meter method (HFM method) and the like.

Specific examples of the particles constituting the supported substance satisfying the thermal conductivity as described above include aluminum nitride particles, silver particles, carbon nanotubes (CNT), boron nitride nanotubes (BNNT), copper particles, aluminum particles, graphite-copper composite material particles, and graphite-aluminum composite material particles, and these may be used singly or in combination of two or more kinds thereof.

Furthermore, in a case where thermal insulation is improved with the supported substance particles, the supported substance particles are preferably particles in which a thermal conductivity of the supported substance is 0.01 to 35 W/m·K from the viewpoint where the supported substance exhibits thermal insulation.

Specific examples of the particles constituting the supported substance satisfying the thermal conductivity as described above include alumina particles, hollow silica particles, calcium silicate particles, and cellulose fibers, and these may be used singly or in combination of two or more kinds thereof.

Moreover, in a case where the visible light absorptivity is improved with the supported substance particles, the supported substance particles are preferably particles in which a light absorptivity at a wavelength of 380 to 780 nm of the supported substance is 70% to 95%, from the viewpoint of sufficiently absorbing light in the visible light region.

Here, the light absorptivity is equivalent to an emissivity, refers to a value of the energy of light emitted by an object through heat radiation in a case where the energy of light emitted by a black object at the same temperature through heat radiation is taken as 100%, and can be measured using a Fourier transform infrared spectrophotometer.

Specific examples of the particles constituting the supported substance satisfying the light absorptivity as described above include carbon black, graphite, metal salts (for example, black iron oxide), organic fine particles (for example, acryl fine particles colored with a dye or a pigment), and glass beads (for example, colored glass fine particles), and these may be used singly or in combination of two or more kinds thereof.

In addition, in order to improve the visible light reflectance with the supported substance particles, the supported substance particles are preferably particles constituted with a material with which a light reflectance at a wavelength of 380 to 780 nm of the supported substance is 70% to 98% from the viewpoint that light in the visible light region is sufficiently reflected.

Here, the light reflectance refers to a value obtained by a relative total light reflection measurement from a combination of specular reflection light and diffuse reflection light, and can be calculated by a method for measuring a total sum of the specular reflection light and the diffuse reflection light using an integrating sphere. In addition, since the light reflectance is affected by the particle diameters of the particles, a value measured from a bulk material, not particles, is adopted.

In a case where the supported substance is an organic material, specific examples of the particles constituting the supported substance satisfying the light reflectance as described above include foamed polyethylene terephthalate and foamed polypropylene; in a case where the supported substance is an inorganic material, examples of the particles constituting the supported substance satisfying the light reflectance as described above include alumina particles, titanium oxide particles, and zinc oxide particles; and these may be used singly or in combination of two or more kinds thereof.

In addition, in order to improve the insulating properties of the surface with the supported substance particles, the supported substance particles are preferably particles constituted with a material in which a volume resistivity of the supported substance is $10^9$ to $10^{15}$ $\Omega$·cm from the viewpoint of expressing sufficient insulating properties.

Here, the volume resistivity refers to a value measured using a four-terminal method. In addition, with regard to the volume resistivity, since the volume resistivity is affected by the particle diameter of the particle, a value measured from a bulk material, not particles, can be adopted in the same manner as the light reflectance.

Specific examples of the particles constituting the supported substance satisfying the volume resistivity described above include mica, alumina particles, zirconia particles, and glass particles, and these may be used singly or in combination of two or more kinds thereof.

Moreover, in order to improve the antimicrobial properties with the supported substance particles, the supported substance particles are preferably antimicrobial particles from the viewpoint where the aluminum composite material of the embodiment of the present invention is applied to the applications of wall materials or the like to afford antimicrobial properties in medical institutions or public facilities.

Here, the "antimicrobial properties" refer to characteristics of suppressing bacterial proliferation and also refer to characteristics of inhibiting the proliferation of or decreasing the number of microbes such as Staphylococcus aureus, Escherichia coli, Pseudomonas aeruginosa, Candida albicans, and Malassezia furfur.

Specific examples of such the antimicrobial particles include copper particles, zinc particles, silver particles, and particles having silver supported on zeolite, and these may be used singly or in combination of two or more kinds thereof.

[Carrying Method]

The carrying method is not particularly limited, and for example, a method known in the related art can be used.

Specific examples of the method include a method in which a supported substance is directly placed on the surface of the above-mentioned oxide film-including aluminum base material and compressed under pressure; a method in which a supported substance is kneaded with a binder, applied onto the surface of the oxide film-including aluminum base material, dried, and then pressurized, as desired; a method in which a supported substance is electrodeposited onto the surface of the oxide film-including aluminum base material; and a method in which a supported substance is deposited on the surface of the oxide film-including aluminum base material.

Examples

Hereinafter, the present invention will be described in more detail with reference to Examples. The materials, the amounts to materials used, the ratios, the treatment details, the treatment procedure, or the like shown in the following Examples can be appropriately modified while not departing from the spirit of the present invention. Therefore, the scope of the present invention should not be restrictively interpreted by the following Examples.

[Manufacture of Oxide Film-Including Aluminum Base Materials (Supports 1 to 37)]

[Manufacture of Aluminum Base Material]

A melt was prepared using an aluminum alloy containing 0.06% by mass of Si, 0.30% by mass of Fe, 0.02% by mass of Cu, 0.001% by mass of Mn, 0.001% by mass of Mg, 0.001% by mass of Zn, and 0.03% by mass of Ti, with the balance being Al and inevitable impurities, and the melt was subjected to a molten treatment and filtration, and then cast into a 500-mm thick and 1,200-mm wide ingot by a DC casting method.

Subsequently, the ingot was scalped with a scalping machine to remove a thickness of 10 mm on average thereof from the surface, then soaked and held at 550°C for about 5 hours, and at a time of the temperature being fallen to 400°C, the ingot was rolled to a rolled plate having a thickness of 2.7 mm, using a hot rolling mill.

In addition, a heat treatment was performed at 500°C using a continuous annealing furnace, and then cold rolling was performed to finish the aluminum base material to a thickness of 0.24 mm, thereby obtaining a JIS 1050 aluminum base material.

[Surface-Roughening Treatment]

This aluminum base material was cut into a width of 1,030 mm, then subjected to a surface-roughening treatment under the condition for the surface-roughening treatment shown in Table 1 below, and stored under the storage condition shown in Table 1 below to manufacture oxide film-including aluminum base materials (supports 1 to 37) which had roughened structures (a large-wave structure, a medium-wave structure, and a small-wave structure) having the average opening diameters shown in Table 2 below and surface area differences $\Delta S$, and had oxide films having the average film thickness shown in Table 2 below.

In addition, with regard to details of the surface-roughening treatment conditions and the storage conditions shown in Table 1 below, the sections attached with "-" in Tables 1 and 2 below indicate that a surface-roughening treatment for forming the corresponding roughened structure was not performed, and thus, the oxide film-including aluminum base material did not have the corresponding uneven structure, as shown below.

<Condition L1>

A mechanical surface-roughening treatment with a rotating roller-like nylon brush was performed while feeding a suspension (a specific gravity of 1.12) of an abrasive (pumice) as an abrasive slurry liquid onto the surface of the aluminum base material, using an apparatus shown in Fig. 7.

In Fig. 7, 51 is an aluminum base material, 52 is a roller-like brush, 53 is an abrasive slurry liquid, and 54 is a supporting roller. The average particle diameter and the maximum particle diameter of the abrasive were 40 $\mu$m and 100 $\mu$m, respectively. The material of the nylon brush was 6·10 Nylon, the hair length was 50 mm, and the hair diameter was 0.3 mm. The nylon brush had hairs implanted densely through holes formed in a $\varphi$300 mm stainless steel-made cylinder. Three rotating brushes were used. A distance between two supporting rollers in the lower part of the brush ($\varphi$200 mm) was 300 mm. The brush rollers were pressed until a load of a driving motor for rotating the brush reached 7 kW plus with respect to the load before pressing the brush roller against the aluminum base material. The rotational direction of the brush was the same as the moving direction of the aluminum base material. The rotation speed of the brush was 250 rpm. Further, the surface was washed with an aqueous alkali solution to dissolve the steep portions of the surface while removing the residues of the abrasive, and the resultant was subjected to water washing, to neutralization and acid washing with an aqueous sulfuric acid solution, and then to water washing and drying. An arithmetic mean roughness Ra of the surface after washing with water and drying was 0.55 $\mu$m.

<Condition L2>

An electrochemical surface-roughening treatment was continuously performed using an alternating current voltage. As an electrolytic cell to be used, the electrolytic cell shown in Fig. 6 was used. Here, the nitric acid concentration was adjusted to 10 g/l, the aluminum ion concentration was adjusted to 5 g/l, the liquid temperature was adjusted to 35°C, and the energization amount was adjusted to 600 c/dm$^2$ in terms of an energization amount on the anode side. In addition, the surface was washed with an aqueous alkali solution to dissolve the steep portions of the surface while removing a smut primarily containing aluminum hydroxide remaining as a surface residue during the electrolytic surface roughening, and the resultant was subjected to water washing, to neutralization and acid washing with an aqueous sulfuric acid solution, and then to water washing and drying. An arithmetic mean roughness Ra of the surface after washing with water and drying was 0.55 $\mu$m.

<Condition L3>

An electrochemical surface-roughening treatment was continuously performed using an alternating current power supply. As an electrolytic cell to be used, the electrolytic cell shown in Fig. 6 was used. Here, the hydrochloric acid concentration was adjusted to 10 g/l, the aluminum ion concentration was adjusted to 5 g/l, the liquid temperature was adjusted to 35°C, and the energization amount was adjusted to 600 c/dm$^2$ in terms of an energization amount on the anode side. In addition, the surface was washed with an aqueous alkali solution to dissolve the steep portions of the surface while removing a smut primarily containing aluminum hydroxide remaining as a surface residue during the electrolytic surface roughening, and the resultant was subjected to water washing, to neutralization and acid washing with an aqueous sulfuric acid solution, and then to water washing and drying. An arithmetic mean roughness Ra of the surface after washing with water and drying was 0.55 $\mu$m.

<Condition L4>

In the final rolling step for the aluminum base material, the roughened surface was transferred to the surface of the aluminum base material.

In the rolling step in the step for producing the aluminum base material, the roughened surface was transferred to the surface of the aluminum base material by performing the final rolling with surface-roughened rolling rolls. The roughness of the roughened surface to be transferred to the surface of the aluminum base material was controlled by controlling the rolling conditions.

Here, a plate having an arithmetic mean roughness Ra of the original aluminum base material of 0.12 $\mu$m was used; after the transfer, the surface was washed with an aqueous alkali solution to remove metal powder generated upon the transfer and subjected to water washing, to neutralization and acid washing with an aqueous sulfuric acid solution, and then to water washing and drying. The transfer condition was set such that an arithmetic mean roughness Ra of the surface after washing with water and drying became 0.55 $\mu$m.

<Condition M1>

An electrochemical surface-roughening treatment was continuously performed using an alternating current voltage at 60 Hz. The electrolytic liquid at this time was a 9 g/L aqueous nitric acid solution (containing 5 g/L of aluminum ions) and the liquid temperature was 50°C. The alternating current power supply waveform was the waveform shown in Fig. 5, the time TP for the current value to increase from zero up to a peak was 0.8 msec, the duty ratio was 1:1, and an electrochemical surface-roughening treatment was performed with a carbon electrode as a counter electrode using a trapezoidal rectangular wave alternating current. Ferrite was used for the auxiliary anode. As the electrolytic cell to be used, the electrolytic cell shown in Fig. 6 was used. The current density was 30 A/dm$^2$ in terms of a peak value of the current and the amount of electricity was 180 C/dm$^2$ in terms of a total sum of the amounts of electricity applied to the aluminum base material serving as an anode. 5% of the current of the current flowing from the power supply was shunted to the auxiliary anode. Thereafter, water washing by spraying was performed.

In addition, the surface was washed with an aqueous alkali solution to dissolve the steep portions of the surface while removing a smut primarily containing aluminum hydroxide remaining as a surface residue during the electrolytic surface roughening, and the resultant was subjected to water washing, to neutralization and acid washing with an aqueous sulfuric acid solution, and then to water washing and drying.

<Condition M2>

The same alternating current power supply waveform and electrolytic cell as in the condition M1 were used, the electrolytic liquid was an 11 g/L aqueous nitric acid solution (containing 5 g/L of aluminum ions), the liquid temperature was 30°C, the current density was 30 A/dm$^2$ in terms of a peak value of the current and the amount of electricity was 250 C/dm$^2$ in terms of a total sum of the amounts of electricity applied to the aluminum base material serving as an anode.

<Condition E1>

An electrochemical surface-roughening treatment was continuously performed using an alternating current voltage at 60 Hz. The electrolytic liquid at this time was a 7.5 g/L aqueous hydrochloric acid solution (containing 5 g/L of aluminum ions) at a temperature of 35°C. The alternating current power supply waveform was the waveform shown in Fig. 5, the time TP for the current value to increase from zero up to a peak was 0.8 msec, the duty ratio was 1:1, and an electrochemical surface-roughening treatment was performed with a carbon electrode as a counter electrode using a trapezoidal rectangular wave alternating current. Ferrite was used for the auxiliary anode. As the electrolytic cell to be used, the same type of the apparatus as shown in Fig. 6 was used. The current density was 25 A/dm$^2$ in terms of a peak value of the current and the amount of electricity was 70 C/dm$^2$ in terms of a total sum of the amounts of electricity applied to the aluminum base material serving as an anode. Thereafter, water washing by spraying was performed.
Furthermore, the surface was washed with an aqueous alkali solution to dissolve the steep portions of the surface while removing a smut primarily containing aluminum hydroxide remaining as a surface residue during the electrolytic surface roughening, and the resultant was subjected to water washing, to neutralization and acid washing with an aqueous sulfuric acid solution, and then to water washing and drying.

<Condition E2>

Under the same condition as the condition E1, the surface-roughening treatment was performed, washing with an aqueous alkali solution was not performed, a smut primarily containing aluminum hydroxide remaining as a surface residue during the electrolytic surface roughening was dissolved in an aqueous sulfuric acid solution and removed, and then the residue was subjected to water washing and drying.

[Storage Condition]

<Condition K1>

After the final water washing upon completion of the surface-roughening treatment, the moisture on the surface was removed by drying with hot air, and the residue was stored in an environment at 25°C and a humidity of 70% for 3 months.

<Condition K2>

After the final water washing upon completion of the surface-roughening treatment, the moisture on the surface was removed by drying with hot air, and the residue was stored in an environment at 25°C and a humidity of 7% for 3 months.

<Condition K3>

After the final water washing upon completion of the surface-roughening treatment, the moisture on the surface was removed by drying with hot air, and the residue was stored in an environment at 60°C and a humidity of 85% for 3 months.
With regard to the manufactured oxide film-including aluminum base materials (supports 1 to 37), the average opening diameter of the concave portions, the surface area difference ΔS, and the average film thickness of the oxide film were measured by the above-mentioned methods. The results are shown in Table 2.

[Table 1]

| Table 1 | Surface-roughening treatment condition | | | Storage condition |
|---|---|---|---|---|
| | Large-wave structure | Medium-wave structure | Small-wave structure | |
| Support 1 | L1 | M1 | E1 | K2 |
| Support 2 | L1 | M1 | - | K2 |

(continued)

| Table 1 | Surface-roughening treatment condition | | | Storage condition |
|---|---|---|---|---|
| | Large-wave structure | Medium-wave structure | Small-wave structure | |
| Support 3 | L1 | - | - | K2 |
| Support 4 | L2 | - | - | K2 |
| Support 5 | L3 | - | - | K2 |
| Support 6 | L4 | - | - | K2 |
| Support 7 | - | M1 | E1 | K2 |
| Support 8 | - | M1 | - | K2 |
| Support 9 | - | M2 | - | K2 |
| Support 10 | L1 | M1 | E2 | K2 |
| Support 11 | - | - | E1 | K2 |
| Support 12 | - | - | E2 | K2 |
| Support 13 | L1 | M1 | E1 | K1 |
| Support 14 | L1 | M1 | - | K1 |
| Support 15 | L1 | - | - | K1 |
| Support 16 | L2 | - | - | K1 |
| Support 17 | L3 | - | - | K1 |
| Support 18 | L4 | - | - | K1 |
| Support 19 | - | M1 | E1 | K1 |
| Support 20 | - | M1 | - | K1 |
| Support 21 | - | M2 | - | K1 |
| Support 22 | L1 | M1 | E2 | K1 |
| Support 23 | - | - | E1 | K1 |
| Support 24 | - | - | E2 | K1 |
| Support 25 | L1 | M1 | E1 | K3 |
| Support 26 | L1 | M1 | - | K3 |
| Support 27 | L1 | - | - | K3 |
| Support 28 | L2 | - | - | K3 |
| Support 29 | L3 | - | - | K3 |
| Support 30 | L4 | - | - | K3 |
| Support 31 | - | M1 | E1 | K3 |
| Support 32 | - | M1 | - | K3 |
| Support 33 | - | M2 | - | K3 |
| Support 34 | L1 | M1 | E2 | K3 |
| Support 35 | - | - | E1 | K3 |
| Support 36 | - | - | E2 | K3 |
| Support 37 | - | - | - | K2 |

[Table 2]

| Table 2 | Average opening diameter (μm) | | | ΔS (%) | Film thickness (nm) |
|---|---|---|---|---|---|
| | Large-wave structure | Medium-wave structure | Small-wave structure | | |
| Support 1 | 15 | 1 | 0.1 | 90 | 1 or more and less than 10 |
| Support 2 | 15 | 1 | - | 45 | 1 or more and less than 10 |
| Support 3 | 15 | - | - | 10 | 1 or more and less than 10 |
| Support 4 | 10 | - | - | 40 | 1 or more and less than 10 |
| Support 5 | 20 | - | - | 30 | 1 or more and less than 10 |
| Support 6 | 110 | - | - | 6 | 1 or more and less than 10 |
| Support 7 | - | 1 | 0.1 | 80 | 1 or more and less than 10 |
| Support 8 | - | 1 | - | 40 | 1 or more and less than 10 |
| Support 9 | - | 3 | - | 45 | 1 or more and less than 10 |
| Support 10 | 15 | 1 | 0.07 | 100 | 1 or more and less than 10 |
| Support 11 | - | - | 0.1 | 50 | 1 or more and less than 10 |
| Support 12 | - | - | 0.07 | 60 | 1 or more and less than 10 |
| Support 13 | 15 | 1 | 0.1 | 90 | 20 or more and less than 100 |
| Support 14 | 15 | 1 | - | 45 | 20 or more and less than 100 |
| Support 15 | 15 | - | - | 10 | 20 or more and less than 100 |
| Support 16 | 10 | - | - | 40 | 20 or more and less than 100 |
| Support 17 | 20 | - | - | 30 | 20 or more and less than 100 |
| Support 18 | 110 | - | - | 6 | 20 or more and less than 100 |
| Support 19 | - | 1 | 0.1 | 80 | 20 or more and less than 100 |
| Support 20 | - | 1 | - | 40 | 20 or more and less than 100 |
| Support 21 | - | 3 | - | 45 | 20 or more and less than 100 |
| Support 22 | 15 | 1 | 0.07 | 100 | 20 or more and less than 100 |
| Support 23 | - | - | 0.1 | 50 | 20 or more and less than 100 |
| Support 24 | - | - | 0.07 | 60 | 20 or more and less than 100 |
| Support 25 | 15 | 1 | 0.1 | 90 | 100 or more and less than 150 |

(continued)

| Table 2 | Average opening diameter (μm) | | | ΔS (%) | Film thickness (nm) |
|---|---|---|---|---|---|
| | Large-wave structure | Medium-wave structure | Small-wave structure | | |
| Support 26 | 15 | 1 | - | 45 | 100 or more and less than 150 |
| Support 27 | 15 | - | - | 10 | 100 or more and less than 150 |
| Support 28 | 10 | - | - | 40 | 100 or more and less than 150 |
| Support 29 | 20 | - | - | 30 | 100 or more and less than 150 |
| Support 30 | 110 | - | - | 6 | 100 or more and less than 150 |
| Support 31 | - | 1 | 0.1 | 80 | 100 or more and less than 150 |
| Support 32 | - | 1 | - | 40 | 100 or more and less than 150 |
| Support 33 | - | 3 | - | 45 | 100 or more and less than 150 |
| Support 34 | 15 | 1 | 0.07 | 100 | 100 or more and less than 150 |
| Support 35 | - | - | 0.1 | 50 | 100 or more and less than 150 |
| Support 36 | - | - | 0.07 | 60 | 100 or more and less than 150 |
| Support 37 | - | - | - | 2 | 1 or more and less than 10 |

[Examples 1 to 22 and Comparative Examples 1 to 15]

20%-of-Pd-containing carbon particles (average equivalent circular diameter: 100 nm or less, manufactured by N. E. CHEMCAT Corporation) were compressed onto the surface of the manufactured oxide film-including aluminum base material (supports 1 to 37) using a pressing roll to manufacture a carrier where the particles were supported such that the thickness reached 20 μm.

[Examples 23 to 70 and Comparative Examples 16 to 21]

The particles shown in Tables 4 and 5 below were compressed onto the surface of the manufactured oxide film-including aluminum base material (supports 1 to 9) using a pressing roll to manufacture a carrier where the particles were supported.

In addition, details of the particles shown in Tables 4 and 5 below are as follows.

- Silver ion-carrying zeolite (average equivalent circular diameter: 2 μm, manufactured by Sinanen Zeomic Co., Ltd.)
- Zirconia particles (average equivalent circular diameter: 50 μm, volume resistivity: $10^{13}$ Ω·cm, manufactured by Tosoh Corporation)
- Aluminum nitride particles (average equivalent circular diameter: 1 μm, thermal conductivity: 150 W/m·K, manufactured by Tokuyama Corporation)
- Alumina particles (average equivalent circular diameter: 4 μm, thermal conductivity: 32 W/m·K, volume resistivity: $10^{13}$ Ω·cm, manufactured by Showa Denko K. K.)
- Carbon black (average equivalent circular diameter: 100 nm or less, light absorptivity: 95%, manufactured by Asahi

Carbon Co., Ltd.)
- TiO$_2$ (average equivalent circular diameter: 0.3 $\mu$m, light reflectance: 90%, manufactured by Ishihara Sangyo Co., Ltd.)

[Evaluation]

The adhesiveness between the supported substance and the support, and the presence or absence of the falling of the supported substance was evaluated.
Specifically, in three steps immediately after compressing the supported substance with a pressing roll, immediately after drying and a further lapse of one day, and immediately after performing a bending processing (bending test) along the curved surface with a curvature radius of 10 mm, the evaluation was performed according to the following standard. The results are shown in Tables 3 to 5 below. Incidentally, A and B are at acceptable levels.

A: Case where the falling of the supported substance cannot be visually confirmed
B: Case where minor falling occurs to an extent that the surface of the aluminum base material is not exposed
C: Case where the falling causing partial exposure of the surface of the aluminum base material occurs

[Table 3]

| Table 3 | Supported substance | | Support | Evaluation | | |
|---|---|---|---|---|---|---|
| | Particles | Average equivalent circular diameter | | After pressurization | After drying and lapse of time | After bending test |
| Example 1 | | | Support 1 | A | A | A |
| Example 2 | | | Support 2 | A | A | B |
| Example 3 | | | Support 3 | A | A | B |
| Example 4 | | | Support 4 | A | B | B |
| Example 5 | | | Support 5 | A | B | B |
| Comparative Example 1 | | | Support 6 | A | C | C |
| Example 6 | | | Support 7 | A | A | A |
| Example 7 | | | Support 8 | A | A | B |
| Example 8 | | | Support 9 | A | A | B |
| Example 9 | | | Support 10 | A | A | A |
| Example 10 | | | Support 11 | A | A | B |
| Example 11 | | | Support 12 | A | A | A |
| Example 12 | | | Support 13 | A | A | A |

(continued)

| Table 3 | Supported substance | | Support | Evaluation | | |
| --- | --- | --- | --- | --- | --- | --- |
| | Particles | Average equivalent circular diameter | | After pressurization | After drying and lapse of time | After bending test |
| Example 13 | 20%-of-Pd-containing carbon particles | 100 nm or less | Support 14 | A | A | B |
| Example 14 | | | Support 15 | A | A | B |
| Example 15 | | | Support 16 | A | B | B |
| Example 16 | | | Support 17 | A | B | B |
| Comparative Example 2 | | | Support 18 | A | C | C |
| Example 17 | | | Support 19 | A | A | A |
| Example 18 | | | Support 20 | A | B | B |
| Example 19 | | | Support 21 | A | A | B |
| Example 20 | | | Support 22 | A | A | A |
| Example 21 | | | Support 23 | A | A | B |
| Example 22 | | | Support 24 | A | A | B |
| Comparative Example 3 | | | Support 25 | A | C | C |
| Comparative Example 4 | | | Support 26 | A | C | C |
| Comparative Example 5 | | | Support 27 | B | C | C |
| Comparative Example 6 | | | Support 28 | A | C | C |
| Comparative Example 7 | | | Support 29 | A | C | C |
| Comparative Example 8 | | | Support 30 | B | C | C |
| Comparative Example 9 | | | Support 31 | A | C | C |
| Comparative Example 10 | | | Support 32 | A | C | C |
| Comparative Example 11 | | | Support 33 | A | C | C |

(continued)

| Table 3 | Supported substance | | Support | Evaluation | | |
|---|---|---|---|---|---|---|
| | Particles | Average equivalent circular diameter | | After pressurization | After drying and lapse of time | After bending test |
| Comparative Example 12 | | | Support 34 | A | C | C |
| Comparative Example 13 | | | Support 35 | A | C | C |
| Comparative Example 14 | | | Support 36 | A | C | C |
| Comparative Example 15 | | | Support 37 | C | C | C |

[Table 4]

| Table 4 | Supported substance | | Support | Evaluation | | |
|---|---|---|---|---|---|---|
| | Particles | Average equivalent circular diameter | | After pressurization | After drying and lapse of time | After bending test |
| Example 23 | Silver ion-carrying zeolite | 2 $\mu$m | Support 1 | A | A | B |
| Example 24 | | | Support 2 | A | B | B |
| Example 25 | | | Support 3 | A | B | B |
| Example 26 | | | Support 4 | A | B | B |
| Example 27 | | | Support 5 | A | B | B |
| Example 28 | | | Support 7 | A | B | A |
| Example 29 | | | Support 8 | A | B | B |
| Example 30 | | | Support 9 | A | A | A |
| Comparative Example 16 | | | Support 6 | A | B | C |

(continued)

| Table 4 | Supported substance | | Support | Evaluation | | |
|---|---|---|---|---|---|---|
| | Particles | Average equivalent circular diameter | | After pressurization | After drying and lapse of time | After bending test |
| Example 31 | Zirconia particles | 50 μm | Support 1 | A | A | B |
| Example 32 | | | Support 2 | A | B | B |
| Example 33 | | | Support 3 | A | B | B |
| Example 34 | | | Support 4 | A | B | B |
| Example 35 | | | Support 5 | A | B | B |
| Example 36 | | | Support 7 | A | A | B |
| Example 37 | | | Support 8 | A | B | B |
| Example 38 | | | Support 9 | A | B | B |
| Comparative Example 17 | | | Support 6 | A | C | C |
| Example 39 | Aluminum nitride particles | 1 μm | Support 1 | A | A | A |
| Example 40 | | | Support 2 | A | A | B |
| Example 41 | | | Support 3 | A | B | B |
| Example 42 | | | Support 4 | A | A | A |
| Example 43 | | | Support 5 | A | A | A |
| Example 44 | | | Support 7 | A | A | A |
| Example 45 | | | Support 8 | A | A | B |
| Example 46 | | | Support 9 | A | A | B |
| Comparative Example 18 | | | Support 6 | A | B | C |

[Table 5]

| | Supported substance | | Support | Evaluation | | |
|---|---|---|---|---|---|---|
| | Particles | Average equivalent circular diameter | | After pressurization | After drying and lapse of time | After bending test |
| Example 47 | Alumina particles | 4 μm | Support 1 | A | A | B |
| Example 48 | | | Support 2 | A | B | B |
| Example 49 | | | Support 3 | A | B | B |
| Example 50 | | | Support 4 | A | A | B |
| Example 51 | | | Support 5 | A | B | B |
| Example 52 | | | Support 7 | A | A | B |
| Example 53 | | | Support 8 | A | B | B |
| Example 54 | | | Support 9 | A | A | B |
| Comparative Example 19 | | | Support 6 | A | C | C |
| Example 55 | Carbon black | 100 nm or less | Support 1 | A | A | A |
| Example 56 | | | Support 2 | A | A | B |
| Example 57 | | | Support 3 | A | A | B |
| Example 58 | | | Support 4 | A | B | B |
| Example 59 | | | Support 5 | A | B | B |
| Example 60 | | | Support 7 | A | B | A |
| Example 61 | | | Support 8 | A | B | B |
| Example 62 | | | Support 9 | A | A | A |
| Comparative Example 20 | | | Support 6 | A | C | C |

(continued)

| | Supported substance | | Support | Evaluation | | |
|---|---|---|---|---|---|---|
| | Particles | Average equivalent circular diameter | | After pressurization | After drying and lapse of time | After bending test |
| Example 63 | TiO$_2$ | 0.3 $\mu$m | Support 1 | A | A | A |
| Example 64 | | | Support 2 | A | A | B |
| Example 65 | | | Support 3 | A | A | B |
| Example 66 | | | Support 4 | A | B | B |
| Example 67 | | | Support 5 | A | B | B |
| Example 68 | | | Support 7 | A | A | A |
| Example 69 | | | Support 8 | A | A | B |
| Example 70 | | | Support 9 | A | A | B |
| Comparative Example 21 | | | Support 6 | A | B | C |

From the results shown in Tables 1 to 5, it could be seen that by using oxide film-including aluminum base materials (supports 1 to 5, 7 to 17, and 19 to 24) having an oxide film having a predetermined film thickness on at least a part of a surface of an aluminum base material, and having a predetermined roughened structure on the surface of the aluminum base material, it is possible to suppress the falling of the supported substance even after performing the bending test, and the aluminum composite material has excellent adhesiveness between the support and the supported substance (Examples 1 to 70).

In contrast, in a case where oxide film-including aluminum base materials (supports 6, 18, 30, and 37) not having a predetermined roughened structure and supports (supports 25 to 36) having a film thickness of an oxide film of 100 nm or more are used, in the step where the supported substance is compressed, following by drying and a lapse of one day, the falling of the supported substance can be confirmed, and it could be seen that the aluminum composite material has deteriorated adhesiveness between the support and the supported substance (Comparative Examples 1 to 21).

Explanation of References

    1 aluminum base material
    2 oxide film
    3 oxide film-including aluminum base material
    4 supported substance
    5, 6 roughened structure
    5a, 6a concave portion
    5b, 6b convex portion
    10 aluminum composite material
    11 aluminum base material
    12 radial drum roller
    13a, 13b main electrode

14 electrolytic treatment liquid
15 electrolytic liquid feed inlet
16 slit
17 electrolytic liquid channel
18 auxiliary anode
19a, 19b thyristor
20 alternating current power supply
21 main electrolytic cell
22 auxiliary anode cell
51 aluminum base material
52 roller-like brush
53 abrasive slurry liquid
54 supporting roller

**Claims**

1. An aluminum composite material comprising:

   an oxide film-including aluminum base material having an oxide film on at least a part of a surface of an aluminum base material; and
   a supported substance supported on the surface of the oxide film-including aluminum base material,
   wherein an average film thickness of the oxide film is 1 nm or more and less than 100 nm, and
   the oxide film-side surface of the aluminum base material has at least one roughened structure selected from the group consisting of a roughened structure including concave portions having an average opening diameter of more than 5 $\mu$m and 100 $\mu$m or less, an uneven structure including concave portions having an average opening diameter of more than 0.5 $\mu$m and 5 $\mu$m or less, and an uneven structure including concave portions having an average opening diameter of more than 0.01 $\mu$m and 0.5 $\mu$m or less.

2. The aluminum composite material according to claim 1,

   wherein a surface area difference $\Delta S$ in the oxide film-side surface of the aluminum base material is 10% or more, and
   the surface area difference $\Delta S$ is a value calculated by Equation (1) from an actual area $S_x$ determined from three-dimensional data obtained by performing measurements at 512×512 points in a 50 $\mu$m×50 $\mu$m range on the surface using an atomic force microscope according to an approximate three-point method and a geometrically measured area $S_0$:

$$\Delta S = (S_x - S_0)/S_0 \times 100 \ (\%) \ ... \ (1).$$

3. The aluminum composite material according to claim 1 or 2,
   wherein the supported substance is in the form of particles having an average equivalent circular diameter of less than 100 $\mu$m.

4. The aluminum composite material according to any one of claims 1 to 3,
   wherein a thermal conductivity of the supported substance is 100 to 2,000 W/m·K.

5. The aluminum composite material according to claim 4,
   wherein the supported substance is at least one selected from the group consisting of aluminum nitride particles, silver particles, carbon nanotubes, boron nitride nanotubes, copper particles, aluminum particles, graphite-copper composite material particles, and graphite-aluminum composite material particles.

6. The aluminum composite material according to any one of claims 1 to 3,
   wherein a thermal conductivity of the supported substance is 0.01 to 35 W/m·K.

7. The aluminum composite material according to claim 6,

wherein the supported substance is at least one selected from the group consisting of alumina particles, hollow silica particles, calcium silicate particles, and cellulose fibers.

8. The aluminum composite material according to any one of claims 1 to 3,
   wherein a light absorptivity at a wavelength of 380 to 780 nm of the supported substance is 70% to 95%.

9. The aluminum composite material according to claim 8,
   wherein the supported substance is at least one selected from the group consisting of carbon black, graphite, a metal salt, organic fine particles, and glass beads.

10. The aluminum composite material according to any one of claims 1 to 3,
    wherein a light reflectance at a wavelength of 380 to 780 nm of the supported substance is 70% to 98%.

11. The aluminum composite material according to claim 10,
    wherein the supported substance is at least one selected from the group consisting of foamed polyethylene terephthalate, foamed polypropylene, alumina particles, titanium oxide particles, and zinc oxide particles.

12. The aluminum composite material according to claim 1 or 2,
    wherein the supported substance is a solid catalyst.

13. The aluminum composite material according to claim 12,
    wherein the solid catalyst is at least one kind of particles selected from the group consisting of 20%-of-Pd-containing carbon particles, copper-zinc oxide composite particles, Ni particles, platinum-alumina composite particles, Mo-V composite oxide particles, Co oxide particles, Mn oxide particles, Cr oxide particles, Fe oxide particles, Rh particles, Pd particles, and Ru particles.

14. The aluminum composite material according to claim 1 or 2,
    wherein the supported substance is in the form of antimicrobial particles.

15. The aluminum composite material according to claim 14,
    wherein the antimicrobial particles are at least one kind of particles selected from the group consisting of copper particles, zinc particles, silver particles, and particle having silver supported on zeolite.

16. The aluminum composite material according to any one of claims 1 to 3,
    wherein a volume resistivity of the supported substance is $10^9$ to $10^{14}$ $\Omega\cdot$cm.

17. The aluminum composite material according to claim 16,
    wherein the supported substance is at least one selected from the group consisting of mica, alumina particles, zirconia particles, and glass particles.

## FIG. 1

10

4

2 } 3
1

## FIG. 2

5

5b    5a

OPENING DIAMETER

1

# FIG. 3

OPENING
DIAMETER

5

5b    5a

1

# FIG. 4

# FIG. 5

# FIG. 6

# FIG. 7

## INTERNATIONAL SEARCH REPORT

| | International application No. |
|---|---|
| | PCT/JP2018/022235 |

| A. CLASSIFICATION OF SUBJECT MATTER |
|---|
| Int.Cl.  B01J23/44(2006.01)i,  B01J21/04(2006.01)i,  B01J21/06(2006.01)i, B01J21/18(2006.01)i,                    B01J27/24(2006.01)i, B01J29/068(2006.01)i,                    B01J32/00(2006.01)i, B01J37/02(2006.01)i, C23C28/04(2006.01)i, H01M4/66(2006.01)i |
| According to International Patent Classification (IPC) or to both national classification and IPC |

| B.   FIELDS SEARCHED |
|---|
| Minimum documentation searched (classification system followed by classification symbols) |
| Int.Cl.  B01J23/44,    B01J21/04,    B01J21/06,    B01J27/18,    B01J27/24, B01J29/068,  B01J32/00,  B01J37/02,  C23C28/01,  H01M4/66 |

| Documentation searched other than minimum documentation to the extent that such documents are included in the fields searched |  |
|---|---|
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

| Electronic data base consulted during the international search (name of data base and, where practicable, search terms used) |
|---|
| |

| C.   DOCUMENTS CONSIDERED TO BE RELEVANT |
|---|

| Category* | Citation of document, with indication, where appropriate, of the relevant passages | Relevant to claim No. |
|---|---|---|
| X | WO 2015/115531 A1 (FUJIFILM CORP.) 06 August 2015, paragraphs [0044]-[0046], [0063]-[0068], [0072], [0073], [0100], [0108], fig. 1E, 2E & US 2016/0294002 A1, paragraphs [0115]-[0125], [0178]-[0205], [0214]-[0219], [0270], [0291], fig. 1E, 2E & EP 3101159 A1 & CN 105934540 A | 1–17 |
| X | JP 2012-216513 A (FUJIFILM CORP.) 08 November 2012, paragraphs [0026]-[0035], [0063]-[0070], [0076]-[0099], [0158], fig. 1 & US 2014/0004420 A1, paragraphs [0035]-[0061], [0110]-[0119], [0126]-[0176], [0286], fig. 1 & WO 2012/132999 A1 & CN 103460465 A | 1–3 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 12 July 2018 (12.07.2018) | 24 July 2018 (24.07.2018) |

| Name and mailing address of the ISA/ Japan Patent Office 3-4-3, Kasumigaseki, Chiyoda-ku, Tokyo 100-8915, Japan | Authorized officer Telephone No. |
|---|---|

Form PCT/ISA/210 (second sheet) (January 2015)

**INTERNATIONAL SEARCH REPORT**

International application No.

PCT/JP2018/022235

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2007-245116 A (FUJIFILM CORP.) 27 September 2007, paragraphs [0014]-[0020], [0046]-[0047], [0077], [0085], [0091]-[0094], [0126] & US 2007/0219092 A1, paragraphs [0025]-[0037], [0065]-[0067], [0109], [0117], [0122]-[0124], [0192] | 1-3, 12, 13 |
| Y | JP 2002-177790 A (MITSUBISHI ALUMINUM CO., LTD.) 25 June 2002, paragraphs [0039]-[0040], [0045]-[0048], [0059] (Family: none) | 1-3, 12, 13 |
| P, X | WO 2017/138382 A1 (NEC ENERGY DEVICES, LTD.) 17 August 2017, paragraphs [0017]-[0027], [0032] (Family: none) | 1, 3 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007245116 A
- JP 2015157272 A
- JP 6135175 A
- JP H06135175 A
- JP 50040047 A
- JP S50040047 A
- JP 1994 A
- JP 055871 A
- JP H06055871 A
- JP 6024168 A
- JP H06024168 A
- JP 55074898 A
- JP S55074898 A
- JP 60036195 A
- JP S60036195 A
- JP 60203496 A
- JP S60203496 A
- JP 61162351 A
- JP H61162351 A
- JP 63104889 A
- JP S63104889 A
- JP 50040047 B
- JP S50040047 B
- JP 48028123 B
- JP S48028123 B
- GB 896563 B
- JP 52058602 A
- JP S52058602 A
- JP 3079799 A
- JP H03079799 A
- JP 55158298 A
- JP S55158298 A
- JP 1981 A
- JP 028898 A
- JP S56028898 A
- JP 52152302 A
- JP S52152302 A
- JP 54085802 A
- JP S54085802 A
- JP 60190392 A
- JP S60190392 A
- JP 58120531 A
- JP S58120531 A
- JP 63176187 A
- JP S63176187 A
- JP 1005889 A
- JP H01005889 A
- JP 1280590 A
- JP H01280590 A
- JP 1118489 A
- JP H01118489 A
- JP 1148592 A
- JP H01148592 A
- JP 1178496 A
- JP H01178496 A
- JP 1188315 A
- JP H01188315 A
- JP 1154797 A
- JP H01154797 A
- JP 2235794 A
- JP H02235794 A
- JP 3260100 A
- JP H03260100 A
- JP 3253600 A
- JP H03253600 A
- JP 4072079 A
- JP H04072079 A
- JP 4072098 A
- JP H04072098 A
- JP 3267400 A
- JP H03267400 A
- JP 1141094 A
- JP H01141094 A
- JP 58207400 A
- JP S58207400 A
- US 4276129 A
- US 4676879 A
- US 4203637 A
- JP 56123400 A
- JP S56123400 A
- JP 57059770 A
- JP S57059770 A
- JP 53012738 A
- JP S53012738 A
- JP 53032821 A
- JP S53032821 A
- JP 53032822 A
- JP S53032822 A
- JP 53032823 A
- JP S53032823 A
- JP 55122896 A
- JP S55122896 A
- JP 55132884 A
- JP S55132884 A
- JP 62127500 A
- JP S62127500 A
- JP 1052100 A
- JP H01052100 A

- JP 1052098 A
- JP H01052098 A
- JP 60067700 A
- JP S60067700 A
- JP 1230800 A
- JP H01230800 A
- JP 3257199 A
- JP H03257199 B
- JP 1977 A
- JP 058602 A
- JP 53012739 A
- JP S53012739 A
- JP 53032833 A
- JP S53032833 A
- JP 53032824 A
- JP S53032824 A
- JP 53032825 A
- JP S53032825 A
- JP 48028123 A
- JP S48028123 A
- JP 51007081 A
- JP S51007081 A
- JP 52133838 A
- JP S52133838 A
- JP 52133840 A
- JP S52133840 A
- JP 52133844 A
- JP S52133844 A
- JP 52133845 A
- JP S52133845 A
- JP 53149135 A
- JP S53149135 A
- JP 54146234 A
- JP S54146234 A
- US 4671859 A
- US 4661219 A
- US 4618405 A
- US 4600482 A
- US 4566960 A
- US 4566958 A
- US 4566959 A
- US 4416972 A
- US 4374710 A
- US 4336113 A
- US 4184932 A
- JP 5195300 A
- JP H05195300 A

**Non-patent literature cited in the description**

- Aluminum Handbook. Japan Light Metal Association, 1990